# EUROPEAN PATENT APPLICATION

(11) **EP 4 819 314 A2**
(43) Date of publication of application: **07.10.2026**
(21) Application number: 25869202.9
(22) Date of filing: 02.09.2025
(51) Int. Cl.: H01M 50/14, H01M 50/105, H01M 50/186, H01M 50/164, H01M 10/04

(54) **SECONDARY BATTERY AND METHOD FOR MANUFACTURING SAME**

(30) Priority: 20.09.2024 KR 20240127574
(71) Applicant: LG Energy Solution, Ltd., Seoul 07335 (KR)
(72) Inventor: KIM, Hyun Jo, Daejeon 34122 (KR); AHN, Se Young, Daejeon 34122 (KR)
(74) Representative: Goddar, Heinz J.
(86) International application number: PCT/KR2025/013471
(87) International publication number: WO 2026/063662

(57) **Abstract**

According to exemplary embodiments of the present disclosure, a secondary battery is provided. The secondary battery includes: an electrode assembly in which a positive electrode and a negative electrode are stacked in a first direction; a case including an accommodating portion accommodating the electrode assembly; an electrode terminal protruding from a first edge portion of the case; and a coating layer on the first edge portion, wherein the first edge portion includes a first surface and a second surface opposite to each other in the first direction, the coating layer is disposed on the first surface, the coating layer includes a thermal resin, the coating layer overlaps the electrode assembly, and the coating layer may not overlap the electrode terminal.

## Description

### [Technical Field]

The present disclosure relates to a secondary battery and a manufacturing method thereof. Specifically, the present disclosure relates to a pouch-type secondary battery and a manufacturing method thereof.

This application claims the benefit of priority from Korean Patent Application No. 10-2024-0127574, filed on September 20, 2024, the entire contents disclosed therein are incorporated by reference into this disclosure.

### [Background]

Unlike primary batteries, secondary batteries can be charged and discharged multiple times. Secondary batteries are widely used as energy sources for various wireless devices such as handsets, laptops, wireless vacuum cleaners, etc. Recently, due to energy density improvements and economies of scale, the manufacturing cost per unit capacity of secondary batteries has dramatically decreased, and as the cruising distance of BEVs (battery electric vehicles) has increased to a level equivalent to fuel vehicles, the primary applications of secondary batteries are shifting from mobile devices to mobility.

The trend in technology development of secondary batteries for mobility is to improve energy density and safety. The safety of secondary batteries for mobility is very significant as it is directly related to the lives of passengers. The safety of secondary batteries can be achieved through mechanical robustness, reliability of electrical insulation, and delay of heat transfer during thermal runaway events.

### [Summary]

### [Technical Problem]

The technical problem to be solved by the present disclosure is to provide a secondary battery with improved performance and reliability.

The technical problem to be solved by the present disclosure is to provide a secondary battery with improved safety.

The technical problem to be solved by the present disclosure is to provide a manufacturing method of a secondary battery with improved safety.

The technical problem to be solved by the present disclosure is to provide a manufacturing method of a secondary battery with improved performance and reliability.

### [Technical Solution]

According to exemplary embodiments of the present disclosure for solving the above-described problems, a secondary battery is provided. The secondary battery includes: an electrode assembly in which a positive electrode and a negative electrode are stacked in a first direction; a case including an accommodating portion accommodating the electrode assembly; an electrode terminal protruding from a first edge portion of the case; and a coating layer on the first edge portion, wherein the first edge portion includes a first surface and a second surface opposite to each other in the first direction, the coating layer is disposed on the first surface, the coating layer includes a thermal resin, the coating layer overlaps the electrode assembly, and the coating layer may not overlap the electrode terminal.

The electrode terminal may protrude in a second direction intersecting the first direction, and the coating layer may not overlap the electrode terminal in the second direction.

The case may include a first corner portion that is part of the first edge portion and overlaps the electrode assembly in the second direction, and the coating layer may be disposed on the first corner portion.

The highest vertical level of the coating layer in the first direction may be equal to or lower than the highest vertical level of the accommodating portion in the first direction.

The coating layer may be in contact with the first surface of the first edge portion, may be spaced apart from the second surface with the first surface therebetween, and may not be in contact with the second surface.

The case may further include the first edge portion, a second edge portion, and a third edge portion adjacent to a first side, a second side, and a third side of the accommodating portion, respectively, the first side and the second side may extend in the second direction intersecting the first direction, the third side and a fourth side of the accommodating portion may extend in a third direction intersecting the first direction and the second direction, the first edge portion may include a first corner portion adjacent to the fourth side, and the coating layer may be disposed on the first corner portion.

The second edge portion may include a second comer portion adjacent to the fourth side, and the coating layer may be further disposed on the second corner portion.

The first edge portion may extend in the second direction intersecting the first direction, the case may further include a sealing portion sealing the first edge portion, and the coating layer may be disposed between the sealing portion and the accommodating portion in the third direction intersecting the first direction and the second direction.

According to exemplary embodiments of the present disclosure for solving the above-described problems, a manufacturing method of a secondary battery is provided. The manufacturing method of the secondary battery includes: assembling an electrode assembly; accommodating the electrode assembly in a case; sealing the case; forming a coating layer on a first surface of an edge portion; and injecting an electrolyte, wherein the coating layer includes a thermal resin, the edge portion includes a corner portion of the case that overlaps the electrode assembly, and the coating layer may be formed on the corner portion.

The coating layer may be formed on the first surface of the edge portion, and the coating layer may not be formed on a second surface opposite to the first surface in a first direction.

The electrode assembly may be stacked in the first direction, and the corner portion may overlap the electrode assembly in a second direction intersecting the first direction.

After the step of injecting the electrolyte, the method may further include: pre-aging; activating; and aging.

### [Advantageous Effects]

According to exemplary embodiments of the present disclosure, a secondary battery may include a coating layer on an edge portion of a case. The coating layer can provide rigidity to the case, thereby preventing the case from being damaged by impact during a process for providing the secondary battery. Accordingly, defects that may occur during a manufacturing process of the secondary battery can be reduced.

According to exemplary embodiments of the present disclosure, a secondary battery with improved safety can be provided.

According to exemplary embodiments of the present disclosure, a secondary battery with improved performance and reliability can be provided.

According to exemplary embodiments of the present disclosure, a manufacturing method of a secondary battery with improved safety can be provided.

According to exemplary embodiments of the present disclosure, a manufacturing method of a secondary battery with improved performance and reliability can be provided.

The effects that can be obtained in exemplary embodiments of the present disclosure are not limited to the above-described effects, and other effects not mentioned can be derived and understood by a person skilled in the art from the following description. In other words, unintended effects of implementing the exemplary embodiments of the present disclosure may also be derived from the exemplary embodiments of the present disclosure by a person skilled in the art.

### [Brief Description of the Drawings]

FIG. 1 is a drawing of a secondary battery according to embodiments of the present disclosure.
FIG. 2 is a drawing of a secondary battery according to embodiments of the present disclosure.
FIG. 3 is an enlarged view of a secondary battery according to embodiments of the present disclosure.
FIG. 4 is an enlarged view of a secondary battery according to embodiments of the present disclosure.
FIG. 5 is a flowchart illustrating a manufacturing method of a secondary battery according to embodiments of the present disclosure.
FIG. 6 is a flowchart illustrating a manufacturing method of a secondary battery according to embodiments of the present disclosure.
FIG. 7 is a drawing for describing a manufacturing method of a secondary battery according to embodiments of the present disclosure.
FIG. 8 is a drawing for describing a manufacturing method of a secondary battery according to embodiments of the present disclosure.
FIG. 9 is a drawing for describing a manufacturing method of a secondary battery according to embodiments of the present disclosure.
FIG. 10 is a drawing for describing a manufacturing method of a secondary battery according to embodiments of the present disclosure.

### [Detailed Description]

Hereinafter, preferred embodiments of the present disclosure will be described in detail with reference to the accompanying drawings. Prior to this, the terms or words used in the present specification and claims should not be construed as being limited to conventional or dictionary meanings, and should be interpreted as meanings and concepts that conform to the technical idea of the present disclosure based on the principle that the inventors can appropriately define the concept of terms in order to describe their own invention in the best way.

Therefore, it should be understood that the embodiments described in the present specification and the configurations shown in the drawings are merely one most preferred embodiment of the present disclosure and do not represent all of the technical ideas of the present disclosure, so that various equivalents and modifications that may replace them may exist at the time of the present application.

In addition, in describing the present disclosure, when it is determined that a detailed description of a related known configuration or function may obscure the gist of the present disclosure, the detailed description thereof will be omitted.

The embodiments of the present disclosure are provided to more completely describe the present disclosure to those skilled in the art, so the shapes and sizes of components in the drawings may be exaggerated, omitted, or schematically illustrated for clearer explanation. Therefore, the size or ratio of each component does not entirely reflect the actual size or ratio.

### (First Embodiment)

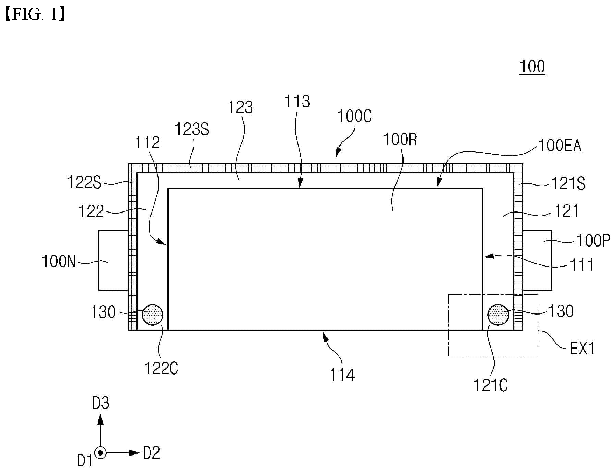

FIG. 1 is a drawing of a secondary battery 100 according to embodiments of the present disclosure.

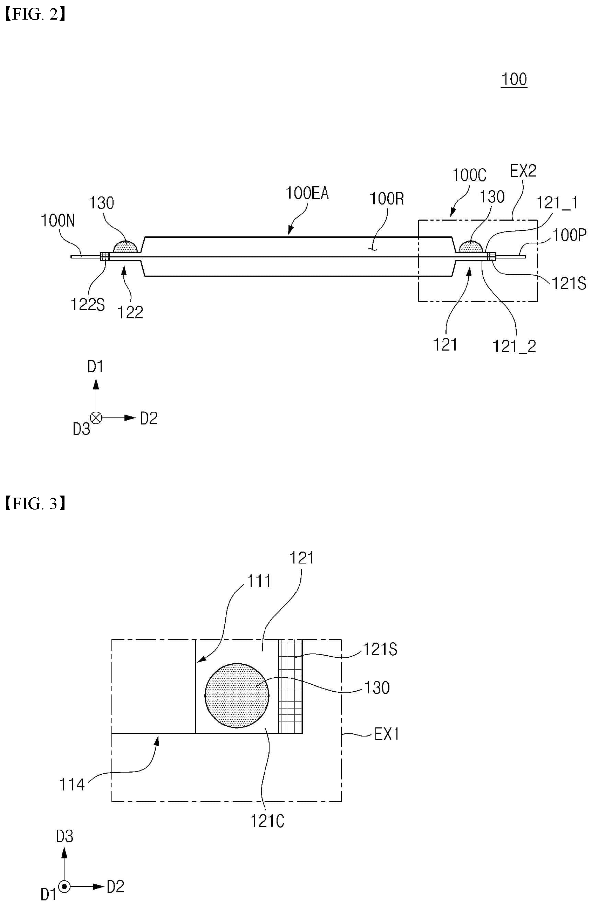

FIG. 2 is a drawing of the secondary battery 100 according to embodiments of the present disclosure.

FIG. 3 is an enlarged view of the secondary battery 100 according to embodiments of the present disclosure. Specifically, FIG. 3 is an enlarged view of region EX1 of FIG. 1.

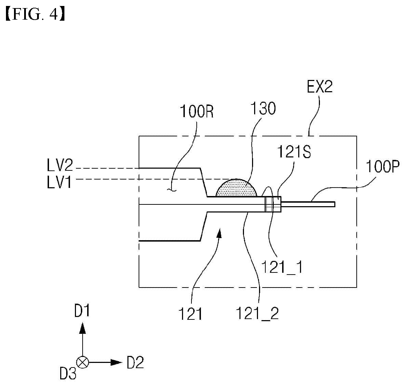

FIG. 4 is an enlarged view of the secondary battery 100 according to embodiments of the present disclosure. Specifically, FIG. 4 is an enlarged view of region EX2 of FIG. 2.

Referring to FIG. 1 and FIG. 2, the secondary battery 100 may include an electrode assembly 100EA, a case 100C, a positive electrode terminal 100P, and a negative electrode terminal 100N. The secondary battery 100 may further include an electrolyte.

In embodiments, the secondary battery 100 may include a pouch-type secondary battery. An electrode assembly of the pouch-type secondary battery may be embedded in a pouch case including an aluminum laminate sheet. Hereinafter, the technical idea of the present disclosure will be described based on an example in which the secondary battery 100 is a pouch-type secondary battery.

The electrode assembly 100EA may include a positive electrode, a negative electrode, and a separator interposed between the positive electrode and the negative electrode. The electrode assembly 100EA may be one of a jelly-roll type and a stack type. The jelly-roll type electrode assembly 100EA may include a winding structure of the positive electrode, the negative electrode, and the separator interposed therebetween. The stack type electrode assembly 100EA may include a plurality of positive electrodes sequentially stacked, a plurality of negative electrodes, and a plurality of separators interposed therebetween.

In the stack type electrode assembly 100EA, the plurality of positive electrodes and the plurality of negative electrodes may be arranged in a first direction D1. In the stack type electrode assembly 100EA, the plurality of positive electrodes and the plurality of negative electrodes may be stacked in the first direction D1.

Each of the plurality of positive electrodes of the electrode assembly 100EA may include a positive electrode tab (not shown). The positive electrode tab of each of the plurality of positive electrodes of the electrode assembly 100EA may be short-circuited with the positive electrode terminal 100P. The positive electrode tab of each of the plurality of positive electrodes of the electrode assembly 100EA may be welded to the positive electrode terminal 100P.

Each of the plurality of negative electrodes of the electrode assembly 100EA may include a negative electrode tab (not shown). The negative electrode tab of each of the plurality of negative electrodes of the electrode assembly 100EA may be short-circuited with the negative electrode terminal 100N. The negative electrode tab of each of the plurality of negative electrodes of the electrode assembly 100EA may be welded to the negative electrode terminal 100N.

The case 100C may include an internal resin layer, a metal layer, and an external resin layer. An adhesive and corrosion prevention layer may be further provided between the internal resin layer and the metal layer and between the external resin layer and the metal layer.

The internal resin layer may have thermal adhesiveness and may be referred to as a sealant layer. The internal resin layer enables sealing of the case 100C. The internal resin layer may include, for example, a polyolefin-based resin such as polypropylene (PP) and polyethylene (PE). The metal layer may include any one of an alloy of iron, carbon, chromium, and manganese, an alloy of iron, chromium, and nickel, and aluminum. The metal layer may be a gas barrier. The metal layer may block entry and exit of gas through the case 100C. The external resin layer may be a surface protection layer. The external resin layer may include a material having wear resistance and heat resistance, such as nylon resin.

The positive electrode terminal 100P and the negative electrode terminal 100N may protrude to the outside of the case 100C. The positive electrode terminal 100P and the negative electrode terminal 100N may protrude from the case 100C in a second direction D2. Accordingly, a resultant voltage and current of the secondary battery 100 may be output through the positive electrode terminal 100P and the negative electrode terminal 100N. The positive electrode terminal 100P may be a positive electrode lead. The negative electrode terminal 100N may be a negative electrode lead.

Hereinafter, the technical idea of the present disclosure will be described based on an example in which each of a plurality of secondary batteries 100 is a bidirectional cell in which the positive electrode terminal 100P and the negative electrode terminal 100N of the secondary battery 100 are formed on opposite sides of the case 100C. A person having ordinary skill in the art will be able to easily understand a case where each of the plurality of secondary batteries 100 is a unidirectional cell based on what is described herein. The positive electrode terminal 100P and the negative electrode terminal 100N may be spaced apart in the second direction D2. The second direction D2 may be substantially parallel to each of the plurality of positive electrodes of the electrode assembly 100EA and each of the plurality of negative electrodes of the electrode assembly 100EA.

In embodiments, the case 100C may include an accommodating portion 100R accommodating the electrode assembly 100EA and an edge portion surrounding the accommodating portion 100R. The edge portion may surround the accommodating portion 100R in a 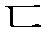 -shape. The edge portion may have a 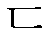 -shape.

Specifically, the positive electrode terminal 100P and the negative electrode terminal 100N may protrude from the edge portion. For example, the positive electrode terminal 100P and the negative electrode terminal 100N may protrude from the edge portion in the second direction D2. For example, the positive electrode terminal 100P may protrude from a first edge portion 121 in the second direction D2. For example, the negative electrode terminal 100N may protrude from a second edge portion 122 in the second direction D2.

In embodiments, a coating layer 130 may be disposed on the first edge portion 121. Specifically, as illustrated in FIG. 2, the first edge portion 121 may include a first surface 121_1 and a second surface 121_2 opposite to each other in the first direction D1. The coating layer 130 may be disposed on the first surface 121_1 of the first edge portion 121. The coating layer 130 may be in contact with the first surface 121_1. For example, the coating layer 130 may be spaced apart from the second surface 121_2 with the first surface 121_1 of the first edge portion 121 therebetween. The coating layer 130 may not be in contact with the second surface 121_2.

The coating layer 130 may be disposed on a local region of the first edge portion 121. For example, the coating layer 130 may be locally disposed on a partial region of the first edge portion 121 that overlaps the electrode assembly 100EA.

The coating layer 130 may include a thermal resin. For example, the coating layer 130 may be formed by applying a thermal resin on a local region of the first surface 121_1 of the first edge portion 121 and then curing the thermal resin.

The coating layer 130 may overlap the electrode assembly 100EA in the second direction D2. The coating layer 130 may not overlap the electrode terminal in the second direction D2. For example, the coating layer 130 may not overlap the positive electrode terminal 100P in the second direction D2.

The case 100C may include a corner portion. Specifically, the case 100C may include a first corner portion 121C that is part of the first edge portion 121. Among four corner portions of the case 100C as illustrated in FIG. 1, a corner portion that is part of the first edge portion 121 and overlaps the electrode assembly 100EA in the second direction D2 may be referred to as the first corner portion 121C.

Specifically, the first edge portion 121, the second edge portion 122, and the third edge portion 123 may surround a first side 111, a second side 112, and a third side 113 of the accommodating portion 100R, respectively.

For example, the first side 111 and the first edge portion 121 may extend in a third direction D3, and the first edge portion 121 may refer to a portion adjacent to the first side 111. The third direction D3 may intersect the first direction D1 and the second direction D2. For example, the second side 112 and the second edge portion 122 may extend in the third direction D3, and the second edge portion 122 may refer to a portion adjacent to the second side 112. The first edge portion 121 and the second edge portion 122 may be spaced apart with the accommodating portion 100R therebetween. For example, the third side 113 and the third edge portion 123 may extend in the second direction D2, and the third edge portion 123 may refer to a portion adjacent to the third side 113. A fourth side 114 of the accommodating portion may not be surrounded by the edge portion. The first edge portion 121, the second edge portion 122, and the third edge portion 123 may form a 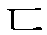 -shape.

Referring also to FIG. 3, the first corner portion 121C may be adjacent to the fourth side 114. The first edge portion 121 may extend in a direction intersecting the fourth side 114, and a partial region of the first edge portion 121 adjacent to the fourth side 114 may be referred to as the first corner portion 121C. Specifically, a partial region of the first edge portion 121 that is adjacent to the fourth side 114 and does not overlap the positive electrode terminal 100P may be referred to as the first corner portion 121C. For example, among the corner portions of the case 100C, a corner portion that is part of the first edge portion 121 and is adjacent to the fourth side 114 may be referred to as the first corner portion 121C.

The coating layer 130 may be disposed on the first corner portion 121C. For example, the coating layer 130 may be disposed on one surface of the first corner portion 121C.

Referring again to FIG. 1, the second corner portion 122C may be adjacent to the fourth side 114. The second edge portion 122 may extend in a direction intersecting the fourth side 114, and a partial region of the second edge portion 122 adjacent to the fourth side 114 may be referred to as the first corner portion 121C. Specifically, a partial region of the second edge portion 122 that is adjacent to the fourth side 114 and does not overlap the negative electrode terminal 100N may be referred to as the second corner portion 122C. For example, among the corner portions of the case 100C, a corner portion that is part of the second edge portion 122 and is adjacent to the fourth side 114 may be referred to as the second corner portion 122C.

The coating layer 130 may be further disposed on the second corner portion 122C. For example, the coating layer 130 may be further disposed on one surface of the second corner portion 122C.

Referring also to FIG. 4, the highest vertical level of the coating layer 130 may be equal to or lower than the highest vertical level of the accommodating portion 100R. In the present specification, the vertical level may refer to a level in the +D1 direction. In the present specification, a higher vertical level may mean being located at a higher level in the +D1 direction. In the present specification, the highest vertical level of a component may refer to the vertical level at a point where the vertical level of the component is highest.

Specifically, the highest vertical level of the coating layer 130 may be a first level LV1. For example, among the vertical levels of the coating layer 130, the highest vertical level may be the first level LV1. For example, the vertical level of the uppermost part of the coating layer 130 may be the first level LV1.

Specifically, the highest vertical level of the accommodating portion 100R may be a second level LV2. For example, among the vertical levels of the accommodating portion 100R, the highest vertical level may be the second level LV2. For example, the vertical level of the upper surface of the accommodating portion 100R may be the second level LV2. The second level LV2 may be higher than the first level LV1.

Referring again to FIG. 1 and FIG. 2, the case 100C may further include a sealing portion sealing the edge portion.

Specifically, a first sealing portion 121S may seal the first edge portion 121. The first sealing portion 121S may extend in the third direction D3. The first sealing portion 121S may seal a part of the first edge portion 121 to seal the case 100C. The first sealing portion 121S may be spaced apart from the accommodating portion 100R with a remaining part of the first edge portion 121 therebetween.

Similarly, a second sealing portion 122S may seal the second edge portion 122. The second sealing portion 122S may extend in the third direction D3. The second sealing portion 122S may seal a part of the second edge portion 122 to seal the case 100C. The second sealing portion 122S may be spaced apart from the accommodating portion 100R with a remaining part of the second edge portion 122 therebetween.

A third sealing portion 123S may seal the third edge portion 123. The third sealing portion 123S may extend in the second direction D2. The third sealing portion 123S may seal a part of the third edge portion 123 to seal the case 100C. The third sealing portion 123S may be spaced apart from the accommodating portion 100R with a remaining part of the third edge portion 123 therebetween.

In embodiments, the coating layer 130 may be disposed on the first edge portion 121, on a region where the first sealing portion 121S is not formed. The coating layer 130 may be disposed between the accommodating portion 100R and the first sealing portion 121S. The coating layer 130 may be disposed between the first side 111 of the accommodating portion 100R and the first sealing portion 121S. The coating layer 130 may be disposed between the accommodating portion 100R and the first sealing portion 121S in the second direction D2. The coating layer 130 may not overlap the first sealing portion 121S in the first direction D1.

Similarly, the coating layer 130 may be disposed on the second edge portion 122, on a region where the second sealing portion 122S is not formed. The coating layer 130 may be disposed between the accommodating portion 100R and the second sealing portion 122S. The coating layer 130 may be disposed between the second side 112 of the accommodating portion 100R and the second sealing portion 122S. The coating layer 130 may be disposed between the accommodating portion 100R and the second sealing portion 122S in the second direction D2. The coating layer 130 may not overlap the second sealing portion 122S in the first direction D1.

The secondary battery 100 described with reference to FIG. 1 to FIG. 4 may include the coating layer 130 on the edge portion of the case 100C. The coating layer 130 can provide rigidity to the case 100C. Accordingly, the case 100C can be prevented from being damaged by impact during a process for manufacturing the secondary battery 100. That is, defects that may occur during a manufacturing process of the secondary battery 100 can be reduced. Accordingly, performance and reliability of the secondary battery 100 can be improved, and safety can be improved.

According to embodiments of the present disclosure, the secondary battery 100 with improved performance and reliability can be provided.

According to embodiments of the present disclosure, the secondary battery 100 with improved safety can be provided.

### (Second Embodiment)

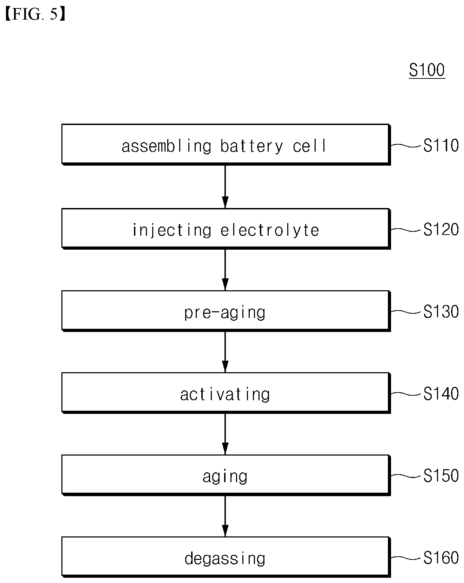

FIG. 5 is a flowchart illustrating a method S100 of manufacturing a secondary battery according to embodiments of the present disclosure.

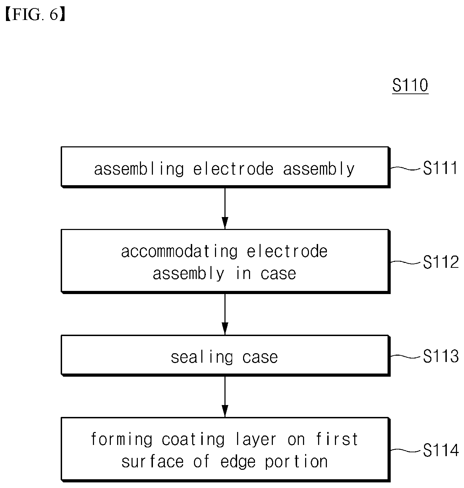

FIG. 6 is a flowchart illustrating a method S110 of manufacturing a secondary battery according to embodiments of the present disclosure.

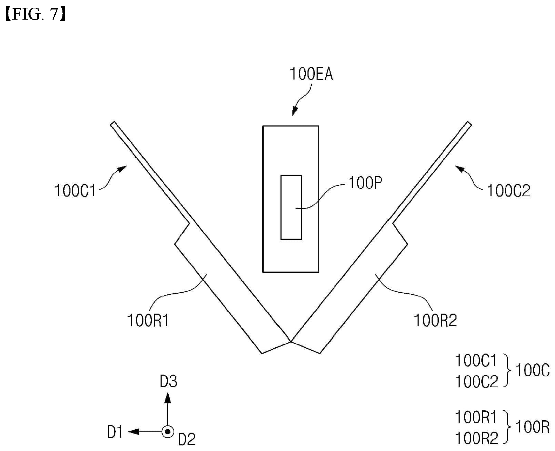

FIG. 7 is a drawing for describing a method S110 of manufacturing a secondary battery according to embodiments of the present disclosure.

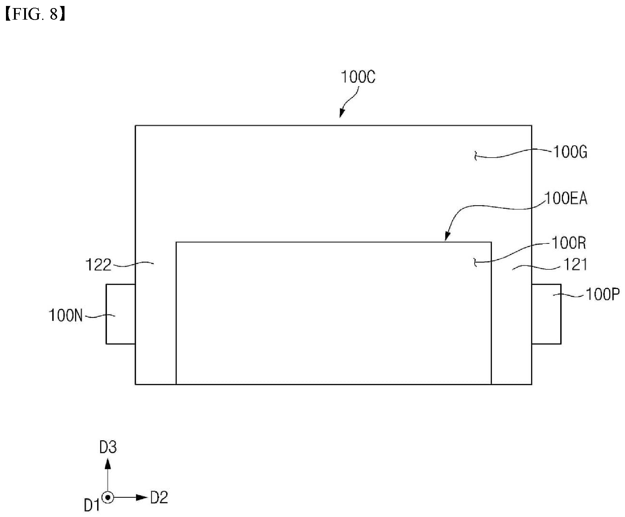

FIG. 8 is a drawing for describing a method S110 of manufacturing a secondary battery according to embodiments of the present disclosure.

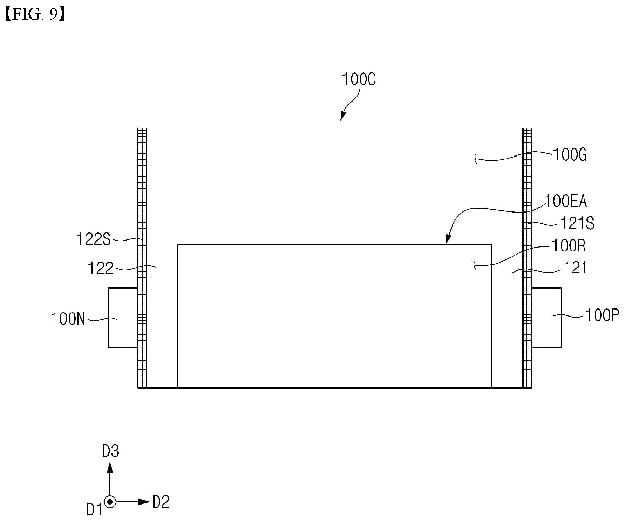

FIG. 9 is a drawing for describing a method S110 of manufacturing a secondary battery according to embodiments of the present disclosure.

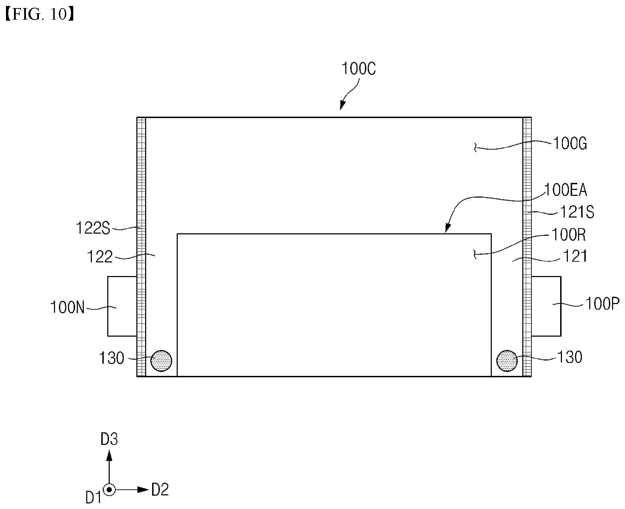

FIG. 10 is a drawing for describing a method S110 of manufacturing a secondary battery according to embodiments of the present disclosure.

Referring to FIG. 5, a method S100 of manufacturing a secondary battery may be provided.

First, a step S110 of assembling a battery cell may be performed.

Specifically, the battery cell may include an electrode assembly and an electrode terminal. The electrode terminal may include, for example, a positive electrode terminal and/or a negative electrode terminal.

In the step of assembling the battery cell, an electrode process including a mixing process, a coating process, a roll pressing process, a selective slitting process, and a notching process may be performed. Subsequently, a process of embedding the electrode assembly in a case may be performed.

Subsequently, a step S120 of injecting an electrolyte may be performed. The electrolyte may be injected into the case.

Subsequently, a pre-aging step S130 of waiting for the electrolyte to be impregnated into the battery cell may be performed. The pre-aging may be performed prior to charging or discharging the battery cell in a process of activating the battery cell.

The key of the pre-aging step S130 is to evenly distribute the electrolyte within the pouch cell so that the electrolyte evenly permeates into both the positive electrode and the negative electrode. The mobility of lithium ions can be improved by the pre-aging step S130. The pre-aging step S130 is a step of completing electrical connection between the positive electrode and the negative electrode before proceeding with the subsequent activation step S140.

Subsequently, an activation step S140 of charging or discharging the battery cell may be performed.

While the battery cell is being charged or discharged, the battery cell may be pressurized by a pressing jig. Gas trap and lithium plating can be prevented by the pressurization of the battery cell, and uniformity of an SEI (Solid Electrolyte Interphase) film can be improved. A battery cell including a uniform SEI film can have a relatively short charging or discharging time.

An SEI film can be formed on a surface of the negative electrode by initial charging. The SEI is a thin film generated on the surface of a negative electrode material when charging for the first time after manufacturing the battery cell. When the battery cell is charged, lithium ions in the battery cell move to the negative electrode, and in the process, an SEI film can be generated on the surface of the negative electrode material by a chemical reaction that occurs when materials in the electrolyte are electrolyzed for the first time. The SEI may be a type of separator. The SEI can prevent additional decomposition reaction of the electrolyte in a process in which lithium ions move from the positive electrode to the negative electrode for battery charging.

Subsequently, a step S150 of aging the battery cell may be performed. In the aging step S150, the battery cell may be stored at room temperature for a predetermined time so that the charged or discharged battery cell is stabilized.

Subsequently, a degassing step S160 may be performed. For example, by removing a gas pocket portion 100G (see FIG. 10), gas generated by a side reaction of the electrolyte during the previous activation step S140 can be removed.

Referring to FIG. 6, a method S110 of manufacturing a secondary battery may be provided. The method S100 of manufacturing a secondary battery described with reference to FIG. 5 may include the method S110 of manufacturing a secondary battery of FIG. 6. For example, the step S110 of assembling the battery cell of FIG. 5 may include the method S110 of manufacturing a secondary battery of FIG. 6.

First, a step S111 of assembling an electrode assembly may be performed. Specifically, the electrode assembly 100EA as described with reference to FIG. 1 and FIG. 2 may be assembled. For example, a stack type electrode assembly 100EA may be assembled by stacking a plurality of positive electrodes and a plurality of negative electrodes in a first direction D1.

Subsequently, a step S112 of accommodating the electrode assembly in a case may be performed. Specifically, the electrode assembly 100EA may be accommodated in the case 100C as described with reference to FIG. 1 and FIG. 2.

Referring also to FIG. 7, the case 100C may be manufactured. The case 100C may be provided by bonding a first case 100C1 and a second case 100C2. The first case 100C1 may include a first accommodating portion 100R1. The first accommodating portion 100R1 is a portion of the first case 100C1 formed into a bowl shape for accommodating the electrode assembly 100EA. The second case 100C2 may include a second accommodating portion 100R2. The second accommodating portion 100R2 is a portion of the second case 100C2 formed into a bowl shape for accommodating the electrode assembly 100EA. The first accommodating portion 100R1 and the second accommodating portion 100R2 may be formed by a pouch forming process. The first accommodating portion 100R1 and the second accommodating portion 100R2 may constitute the accommodating portion 100R.

The first case 100C1 and the second case 100C2 may be integrally formed. The electrode assembly 100EA may be accommodated in the accommodating portion 100R of the case 100C. For example, a boundary line of the first case 100C1 and the second case 100C2 may be folded so that the first accommodating portion 100R1 and the second accommodating portion 100R2 overlap in the first direction D1, and the first case 100C1 and the second case 100C2 may be bonded.

Referring also to FIG. 8, the electrode assembly 100EA may be accommodated in the case 100C including the accommodating portion 100R and the gas pocket portion 100G. The case 100C may include a first edge portion 121 and a second edge portion 122. The first edge portion 121 and the second edge portion 122 may be located at a side of the accommodating portion 100R. The first edge portion 121 and the second edge portion 122 may include a portion overlapping the accommodating portion 100R in a second direction D2. The first edge portion 121 and the second edge portion 122 may extend in a third direction D3. A positive electrode terminal 100P and a negative electrode terminal 100N may protrude from the case 100C.

Subsequently, a step S113 of sealing the case may be performed.

Referring also to FIG. 9 specifically, a first sealing portion 121S and a second sealing portion 122S may be formed. For example, the first sealing portion 121S may be formed by sealing the first edge portion 121. For example, the second sealing portion 122S may be formed by sealing the second edge portion 122.

Subsequently, a step S114 of forming a coating layer on the first surface of the edge portion may be performed.

Referring also to FIG. 10 specifically, the coating layer 130 may be formed on a corner portion of the case 100C. For example, as described with reference to FIG. 1, the coating layer 130 may be formed on a corner portion that overlaps the electrode assembly 100EA in the second direction D2 and does not overlap the electrode terminal in the second direction D2. For example, as described with reference to FIG. 2, the coating layer 130 may be formed on the first surface 121_1 of the first edge portion 121. For example, the coating layer 130 may be formed on the first surface of the second edge portion 122.

The methods S100 and S110 of manufacturing a secondary battery described with reference to FIG. 5 to FIG. 10 may include the step S114 of forming the coating layer on the first surface of the edge portion. As described above, the coating layer 130 can provide rigidity to the case 100C. Accordingly, damage and defects of the case 100C that may occur in subsequent processes can be prevented. That is, performance and reliability of the secondary battery 100 can be improved, and safety can be improved.

According to embodiments of the present disclosure, methods S100 and S110 of manufacturing a secondary battery with improved performance and reliability can be provided.

According to embodiments of the present disclosure, methods S100 and S110 of manufacturing a secondary battery with improved safety can be provided.

As described above, the present disclosure has been described in more detail through drawings and embodiments. However, it should be understood that the configurations described in the drawings or the embodiments described in the present specification are merely one embodiment of the present disclosure and do not represent all of the technical ideas of the present disclosure, so various equivalents and modifications may exist that can substitute for these at the time of filing the present application.

## Claims

1. A secondary battery, comprising:
an electrode assembly in which a positive electrode and a negative electrode are stacked in a first direction;
a case comprising an accommodating portion accommodating the electrode assembly;
an electrode terminal protruding from a first edge portion of the case; and
a coating layer on the first edge portion,
wherein the first edge portion comprises a first surface and a second surface opposite to each other in the first direction,
wherein the coating layer is disposed on the first surface,
wherein the coating layer comprises a thermal resin,
wherein the coating layer overlaps the electrode assembly, and the coating layer does not overlap the electrode terminal.

2. The secondary battery of claim 1, wherein the electrode terminal protrudes in a second direction intersecting the first direction, and
wherein the coating layer does not overlap the electrode terminal in the second direction.

3. The secondary battery of claim 2, wherein the case comprises a first corner portion that is part of the first edge portion and overlaps the electrode assembly in the second direction, and
wherein the coating layer is disposed on the first corner portion.

4. The secondary battery of claim 1, wherein the highest vertical level of the coating layer in the first direction is equal to or lower than the highest vertical level of the accommodating portion in the first direction.

5. The secondary battery of claim 1, wherein the coating layer is in contact with the first surface of the first edge portion, is spaced apart from the second surface with the first surface therebetween, and is not in contact with the second surface.

6. The secondary battery of claim 1, wherein the case further comprises the first edge portion, a second edge portion, and a third edge portion adjacent to a first side, a second side, and a third side of the accommodating portion, respectively,
wherein the first side and the second side extend in a second direction intersecting the first direction,
wherein the third side and a fourth side of the accommodating portion extend in a third direction intersecting the first direction and the second direction,
wherein the first edge portion comprises a first corner portion adjacent to the fourth side, and
wherein the coating layer is disposed on the first corner portion.

7. The secondary battery of claim 6, wherein the second edge portion comprises a second corner portion adjacent to the fourth side, and
wherein the coating layer is further disposed on the second corner portion.

8. The secondary battery of claim 1, wherein the first edge portion extends in the second direction intersecting the first direction,
wherein the case further comprises a sealing portion sealing the first edge portion, and
wherein the coating layer is disposed between the sealing portion and the accommodating portion in the third direction intersecting the first direction and the second direction.

9. A manufacturing method of a secondary battery, comprising:
assembling an electrode assembly;
accommodating the electrode assembly in a case;
sealing the case;
forming a coating layer on a first surface of an edge portion; and
injecting an electrolyte,
wherein the coating layer comprises a thermal resin,
wherein the edge portion comprises a corner portion of the case that overlaps the electrode assembly, and
wherein the coating layer is formed on the corner portion.

10. The manufacturing method of the secondary battery of claim 9, wherein the coating layer is formed on the first surface of the edge portion, and
wherein the coating layer is not formed on a second surface opposite to the first surface in a first direction.

11. The manufacturing method of the secondary battery of claim 9, wherein the electrode assembly is stacked in the first direction, and
wherein the corner portion overlaps the electrode assembly in a second direction intersecting the first direction.

12. The manufacturing method of the secondary battery of claim 9, further comprising, after the step of injecting the electrolyte:
pre-aging;
activating; and
aging.
